(19) Europäisches Patentamt
European Patent Office
Office européen des brevets

(11) **EP 1 240 541 B1**

(12) **EUROPÄISCHE PATENTSCHRIFT**

(45) Veröffentlichungstag und Bekanntmachung des Hinweises auf die Patenterteilung:
**27.02.2008 Patentblatt 2008/09**

(21) Anmeldenummer: **00991092.8**

(22) Anmeldetag: **18.12.2000**

(51) Int Cl.:
***G02C 7/02*** *(2006.01)*

(86) Internationale Anmeldenummer:
**PCT/DE2000/004509**

(87) Internationale Veröffentlichungsnummer:
**WO 2001/044859 (21.06.2001 Gazette 2001/25)**

(54) **EINSTÄRKEN-BRILLENGLAS**

SINGLE VISION SPECTACLE LENS

VERRE CORRECTEUR SIMPLE

(84) Benannte Vertragsstaaten:
**AT BE CH CY DE DK ES FI FR GB GR IE IT LI LU MC NL PT SE TR**

(30) Priorität: **16.12.1999 DE 19960826**

(43) Veröffentlichungstag der Anmeldung:
**18.09.2002 Patentblatt 2002/38**

(73) Patentinhaber: **Rodenstock GmbH**
**80469 München (DE)**

(72) Erfinder:
• **ESSER, Gregor**
**85540 Haar (DE)**

• **ALTHEIMER, Helmut**
**87650 Baisweil (DE)**
• **PFEIFFER, Herbert**
**81247 München (DE)**
• **HAIMERL, Walter**
**80337 München (DE)**

(74) Vertreter: **Müller-Boré & Partner**
**Patentanwälte**
**Grafinger Strasse 2**
**81671 München (DE)**

(56) Entgegenhaltungen:
| | |
|---|---|
| EP-A- 0 560 999 | WO-A-99/63392 |
| DE-A- 19 540 186 | US-A- 4 613 217 |

## Beschreibung

### Technisches Gebiet

Die Erfindung bezieht sich auf ein Verfahren zum Herstellen eines Einstärken-Brillenglases.

### Stand der Technik

Ein Brillenglas, von dem bei der Formulierung des Oberbegriffs des Patentanspruchs 1 ausgegangen wird, ist durch das Beispiel 7 der EP 0 560 999 A1 bekannt. Dieses Brillenglas weist eine rotationssymmetrische asphärische Fläche und eine atorische Fläche auf.

Die EP 0 560 999 A1 beschäftigt sich im wesentlichen damit, bei Brillengläsern mit astigmatischer Wirkung die Linsendicke und die Abbildungsfehler zu verringern. Dabei verbleiben jedoch - wie man den Fig. 21a und 21b der EP 0 560 999 A1 entnehmen kann - sowohl beim astigmatischen Fehler als auch bei der Brechwertabweichung in beiden Hauptschnitten "Restfehler" von mindestens 0,18 dpt.

Aus der DE 195 40 186 A1 ist ein Brillenglas mit zwei asphärischen Flächen bekannt, von denen mindestens eine rotationssymmetrisch ausgebildet ist. Das Ziel auch dieser Anmeldung ist es, die Dicke und die Abbildungsfehler eines Brillenglases zu reduzieren. In der Anmeldeschrift wird jedoch ausdrücklich ausgesagt, daß die Abbildungsfehler in Radialrichtung mit dem Abstand r vom Scheitel zunehmen. Dabei können die Abbildungsfehler bei einem Abstand von 30 mm Werte von über 0,1 dpt annehmen. Weiterhin gibt es keine Vorzugsrichtung entlang derer die Abbildungsfehler besonders korrigiert werden.

Auf die beiden vorgenannten Druckschriften wird im übrigen zur Erläuterung aller hier nicht näher beschriebenen Einzelheiten ausdrücklich Bezug genommen.

### Darstellung der Erfindung

Erfindungsgemäß ist erkannt worden, daß es möglich ist, ein Einstärken-Brillenglas so zu gestalten, daß entlang mindestens einer Linie bis zu einem Blickwinkel von 40 Grad weder ein astigmatischer Fehler noch eine Brechwertabweichung auftritt.

Der Erfindung liegt damit die Aufgabe zugrunde, ein Verfahren zum Herstellen eines Brillenglases anzugeben, das hinsichtlich des astigmatischen Fehlers und/oder der Brechwertabweichung möglichst gut optimiert ist, wobei kosmetische Gesichtspunkte, wie die Durchbiegung zwar nicht außer Betracht bleiben, jedoch nicht in erster Linie berücksichtigt werden.

Insbesondere sollen astigmatische Fehler und Refraktionsfehler möglichst in bezug auf alle Blickrichtungen vorteilhaft korrigiert werden. Zudem sollen die Flächen bzw. Oberflächen des Brillenglases zur Verringerung der genannten Fehler optimiert sein. Der zusätzliche Aufwand soll dabei trotzdem gering gehalten sein.

Eine erfindungsgemäße Lösung dieser Aufgabe ist in Patentanspruch 1 angegeben. Weiterbildungen der Erfindung sind Gegenstand der Unteransprüche.

Erfindungsgemäß ist erkannt worden, daß eine Korrektion beider Abbildungsfehler, d.h. sowohl des Astigmatismus als auch des Refraktionsfehlers, für alle Blickrichtungen nicht möglich ist. Dies gilt auch bei der Verwendung von zwei asphärischen Flächen. Man kann entweder nur den Astigmatismus oder nur den Refraktionsfehler für alle Blickwinkel korrigieren. Mit einer zweiten asphärischen Fläche lassen sich nur die kosmetischen Eigenschaften , wie z.B. die Dicke oder die Durchbiegung zusätzlich verbessern (s. DE 195 40 186 A1).

Grundlage der Erfindung ist nun, daß, wenn man schon nicht für alle Blickrichtungen die Abbildungsfehler korrigieren kann, man dies, abweichend vom Stand der Technik, für eine oder mehrere Vorzugsrichtungen vornehmen kann.

Eine solche Vorzugsrichtung ist im allgemeinen die horizontale und/oder die vertikale Richtung. Es kann aber auch, je nach Anwendungsfall (z.B. Golfspieler), jede beliebige andere Richtung sein. Dabei dürfen die Abbildungsfehler allerdings für die anderen Blickrichtungen (bis 40 Grad Blickauslenkung) keine Werte überschreiten, die das direkte Sehen stark beeinträchtigen. Dies sind z.B. Werte von 1,0 dpt.

Um dies zu erreichen, benötigt man mindestens eine atorische Fläche. Die zweite Fläche kann dann beliebig gewählt werden, ist aber vorzugsweise eine rotationssymmetrische asphärische Fläche.

Die atorische Fläche kann eine Fläche mit zwei, einer oder keiner Symmetrieebene sein. Stimmen die Vorzugsrichtung für die Korrektur und die Achslage des Astigmatismus nicht überein - dies ist vergleichsweise häufig der Fall - , so hat die atorische Fläche vorzugsweise keine Symmetrieebene mehr.

Auch bei einer rein sphärischen Verordnung benötigt man, im Gegensatz zum Stand der Technik, mindestens eine atorische Fläche. Entweder man verwendet dann eine atorische Fläche, bei der die Scheitelkrümmungen gleich sind - also ein Flächenastigmatismus nur außerhalb des Zentrums bzw. des Scheitels auftritt -, was zu bevorzugen ist, oder man muß den - eigentlich nicht erwünschten - Astigmatismus am Scheitel durch eine zweite torische oder atorische Fläche kompensieren.

Erfindungsgemäß es ist vorteilhaft, wenn die Anzahl der Linien gemäß Anspruch 1 größer als 1 ist. Die Brillenglasflächen können je nach den optischen Anforderungen zusätzlich angepasst sein. Auch die Ausgestaltung sowie die Lage der Linie bzw. der Linien kann vorteilhaft entsprechend den optischen Anforderungen vorgenommen werden.

## Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:

Fig. 1:     den astigmatischen Fehler eines erfindungsgemäßen Ausführungsbeispiels "Brillenglas Nr. 1"

Fig. 2:     den Refraktionsfehler des erfindungsgemäßen Ausführungsbeispiels "Brillenglas Nr. 1"

Fig. 3:     den astigmatischen Fehler eines erfindungsgemäßen Ausführungsbeispiels "Brillenglas Nr.

Fig. 4:     den Refraktionsfehler des erfindungsgemäßen Ausführungsbeispiels "Brillenglas Nr. 2".

## Darstellung von Ausführungsbeispielen

Erfindungsgemäß ist wenigstens eine der beiden Flächen des Brillenglases, also die Vorderfläche oder die augenseitige Fläche, eine atorische Fläche. Beschreiben kann man solche atorischen Flächen z.B. mit nachfolgend angegebenen mathematischen Ansätzen, wobei selbstverständlich auch andere Ansätze, wie beispielsweise Ansätze mit Spline-Funktionen möglich sind. Die folgenden Ansätze werden deshalb nur zur allgemeinen Erläuterung angegeben:

Bei den folgenden Erläuterungen wird ohne Beschränkung der Allgemeinheit ein kartesisches Koordinatensystem verwendet, bei dem die x-Achse horizontal (in Gebrauchsstellung) und die y-Achse vertikal orientiert sind. Die z-Achse steht auf dem Scheitel des Brillenglases senkrecht, in dem sich auch der Koordinatenursprung befindet.

Nachfolgend werden die verschiedenen möglichen Fälle der Ausbildung eines erfindungsgemäßen Brillenglases, nämlich der eines Atorus ohne jegliche Symmetrie, mit einer oder mit zwei Symmetrieachsen beschrieben.

## Atorus ohne Symmetrien

| | |
|---|---|
| $$z(x,y) = \frac{r^2 c}{1 + \sqrt{1 - (1+\chi)r^2 c^2}} + \sum_{i=2}^{n} A_{2i} r^{2i}$$ | z: Pfeilhöhe beschrieben durch einen Kegelschnitt mit Zusatzgliedern |
| mit: | |
| $$r^2 = x^2 + y^2$$ | x,y : Koordinaten |
| $$c = c_1 \frac{x^2}{r^2} + c_2 \frac{y^2}{r^2} = c_1 \cos^2 \psi + c_2 \sin^2 \psi$$ | c: Scheitelkrümmung, $c_1$, $c_2$ : Hauptkrümmungen $\psi$ : Azimut |
| $$\chi = \chi(\psi) = \chi_0 + \sum_{k=1}^{l} (c_k \sin k\psi + d_k \cos k\psi)$$ | $\chi$ : Kegelschnittkoeffizient |

| | A: Zusatzglieder |
|---|---|
| $$A_{2i} = A_{2i}(\psi) = A_{2i,0} + \sum_{j=1}^{m} (e_{2i,j} \sin j\psi + f_{2i,j} \cos j\psi)$$ | |

Ein weiterer möglicher Ansatz insbesondere für einen Atorus mit einer Symmetrieebene lautet:

$$A_{2i} = A_{2i}(\psi) = A_{2i,0} + \sum_{j=1}^{m} (e_{2i,j} \sin j\psi + f_{2i,j} \cos j\psi)$$

| | |
|---|---|
| $$z(x,y) = \dfrac{r^2 c}{1 + \sqrt{1-(1+\chi)r^2 c^2}}$$ | z: Pfeilhöhe Kegelschnitt |
| mit: | |
| $$r^2 = x^2 + y^2$$ | x,y : Koordinaten |
| $$c = c_1 \frac{x^2}{r^2} + c_2 \frac{y^2}{r^2} = c_1 \cos^2 \psi + c_2 \sin^2 \psi$$ | c : Scheitelkrümmung, $C_1$, $C_2$ : Hauptkrümmungen $\psi$ : Azimut |
| $$\chi = \chi(\psi) = \frac{1}{4}(\chi_1 + \chi_2 + \chi_3 + \chi_4) + \frac{1}{2}(\chi_2 - \chi_4)\sin\psi + \frac{1}{2}(\chi_1 - \chi_3)\cos\psi$$ $$+ \frac{1}{4}(\chi_1 - \chi_2 + \chi_3 - \chi_4)\cos 2\psi + A_2 \sin 2\psi + \sum_{k=1}^{n}\{A_{2k+2}\sin(2k+2)\psi$$ $$+ A_{4k-1}[\sin(4k-1)\psi + \sin\psi] + A_{4k+1}[\sin(4k+1)\psi - \sin\psi]$$ $$+ B_{4k}(\cos 4k\psi - 1) + B_{4k+2}[\cos(4k+2)\psi - \cos 2\psi] +$$ $$B_{2k+1}[\cos(2k+1)\psi - \cos\psi]\}$$ | $\chi$: Kegelschnitt-koeffizient |

Verwendet man einen Atorus mit zwei Symmetrieebenen

| | |
|---|---|
| $$z(x,y) = \frac{r^2 c}{1 + \sqrt{1-(1+\chi)r^2 c^2}} + \sum_{i=2}^{n} I_{2i} r^{2i}$$ | z: Pfeilhöhe Kegelschnitt mit Zusatzgliedern |
| mit: | |
| $$r^2 = x^2 + y^2$$ | x,y : Koordinaten |
| $$c = c_1 \frac{x^2}{r^2} + c_2 \frac{y^2}{r^2} = c_1 \cos^2 \psi + c_2 \sin^2 \psi$$ | c : Scheitelkrümmung, $C_1$, $C_2$ : Hauptkrümmungen $\psi$ : Azimut |
| $$\chi = \chi(\psi) = \chi_1 \frac{x^2}{r^2} + \chi_2 \frac{y^2}{r^2} +$$ $$\sum_{k=1}^{l} \left[ (\frac{x^2-y^2}{r^2}) - 1 \right]^k (a_{2k} + a_{2k+1} \frac{x^2-y^2}{r^2})$$ | $\chi$ : Kegelschnittkoeffizient |
| $$I_{2i} = I_{2i,1} \frac{x^2}{r^2} + I_{2i,2} \frac{y^2}{r^2} +$$ $$\sum_{j=1}^{m} \left[ (\frac{x^2-y^2}{r^2}) - 1 \right]^j (b_{2i,2j} + b_{2i,2j+1} \frac{x^2-y^2}{r^2})$$ | I: Zusatzglieder |

Eine rotationssymmetrische Asphäre kann wie folgt beschrieben werden:

| | |
|---|---|
| $$z(x,y) = \frac{1 - \sqrt{1-(1+\chi)r^2 c^2}}{c(1+\chi)} + \sum_{i=2}^{n} I_{2i} r^{2i}$$ | z: Pfeilhöhe Kegelschnitt mit Zusatzgliedern |
| mit : | |
| $$r^2 = x^2 + y^2$$ x,y : Koordinaten c : Scheitelkrümmung, $\chi$ : Kegelschnittkoeffizient I : Zusatzglieder | |

Das erste Ausführungsbeispiel "Brillenglas Nr. 1" ist folgendermaßen definiert:

Es erfolgt eine Vollkorrektion entlang der vertikalen und horizontalen Richtung.

Bei dem Beispiel ist

|  |  |
|---|---|
| die sphärische Verordnung: | sph -4,0 dpt |
| der Zylinder | zyl +1,0 dpt, und |
| die Achslage | A     0 Grad |

Die Vorderfläche ist eine Sphäre mit einer Scheitelkrümmung D = 1,91 dpt

Bei der Rückfläche handelt es sich um einen Atorus mit zwei Symmetrieebenen. Es gelten die folgenden Werte:

```
n = 2, l = 2, m = 2, c1 = 11,79 dpt,   c2 = 9,8 dpt,
```

chi1 =     -0.597189672229962
chi1 =     -5.76097881680865

a2 =       0.425927329384394D-001
a3 =       0.444201161488561D-001
a4 =       = 0.37-5517941270927D-001
a5 =       = 0.127887663998763D-001
I2,1 =     -0.151595969823393D-006
I2,2 =     0.402179174652427D-006
b2,2 =     -0.209816198640939D-006
b2,3 =     -0.634206673176649D-007
b2,4 =     -0.605531339980326D-007
b2,5 =     -0.794011831309611D-007
I4,2 =     0.106397999616511D-009
I4,3 =     -0.791028013692852D-011
b4,2 =     -0.315538201137624D-010
b4,3 =     -0.185092513672303D-010
b4,4 =     -0.263190234501376D-010
b4,5 =     -0.597727612074880D-011

Glasdaten:

Brechzahl = 1,502,
Mittendicke = 5,0 mm

Das zweite erfindungsgemäße Ausführungsbeispiel "Brillenglas Nr. 2" ist folgendermaßen definiert:

Es erfolgt eine Vollkorrektion entlang der vertikalen und horizontalen Richtung.

| | | |
|---|---|---|
| Verordnung: | sph | +3,0 dpt |
| | zyl | +1,0 dpt |
| | A | 0 Grad |

Vorderfläche: Rotationssymmetrische Asphäre mit

n =    4,
c =    9,52 dpt

chi =    4.33051940778317
I1 =     -0.106601181782690D-005
I2 =     -0.490037108005607D-010
I3 =     -0.626005827177695D-013
I4 =     -0.188711511368033D-016

Rückfläche: Atorus ohne Symmetrieen mit

n =    2
c1 =    3,7 dpt,
c2 =    1,71 dpt,

chi1 = -70.5339643507617
chi2 = -303.892954849129
chi3 = -70.6171394390323
chi4 = -303.120828002937
A2 = 0.302644555982620
A3 = = 0.201377303788072
A4 = -0.177484884515455D-001
A5 = -0.360085396588794D-001
A6 = 0.216477702374411D-002
A7 = -0.963938234393784D-001
A8 = -0.822772591258294D-001
B3 = -0.121704657579476D-001
B4 = 0.821433018833963D-003
B5 = 0.389643247516801
B6 = -31.7042633523933
B7 = -0.207846272892884
B8 = 12.4332302140801

Glasdaten:

Brechzahl = 1,502,
Mittendicke = 4,92 mm

In den Figuren sind der astigmatische Fehler und der Refraktionsfehler für die beiden Ausführungsbeispiele dargestellt:

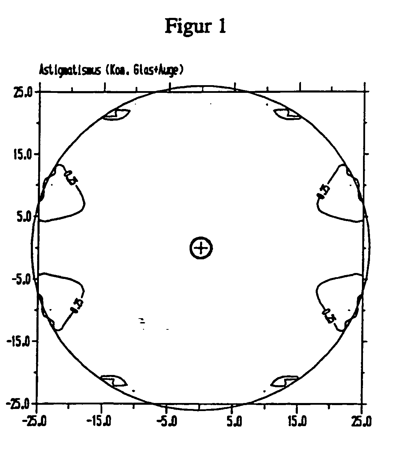

Fig. 1 zeigt den astigmatischen Fehler, d.h. die Abweichung des Astigmatismus vom verordneten Astigmatismus unter Berücksichtigung der Achslage des "Brillenglases Nr. 1". Die Linie stellt die 0,25 dpt Isolinie dar. Man sieht, daß das Brillenglas fast überall dem verordneten Werten entspricht, insbesondere entlang der horizontalen und vertikalen Richtung. Nur in der Peripherie außerhalb der bevorzugten Richtungen treten größere Abweichungen auf.

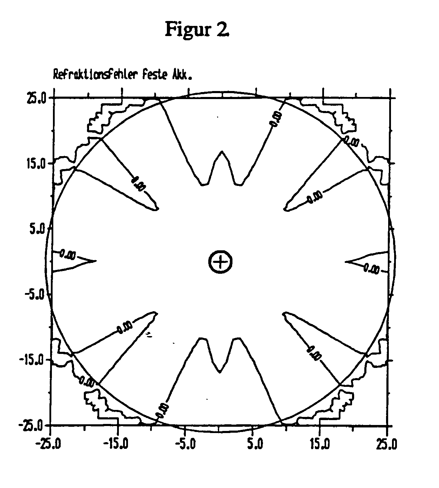

Fig. 2 zeigt den Refraktionsfehler, d.h. die Abweichung des mittleren Brechwertes vom verordneten mittleren Brechwert des "Brillenglases Nr. 1". Man sieht, daß die Abweichungen überall um den Wert 0 schwanken.

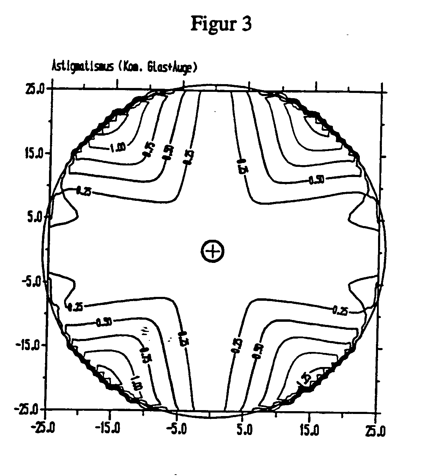

Fig. 3 zeigt den astigmatischer Fehler, d.h. die Abweichung des Astigmatismus vom verordneten Astigmatismus unter Berücksichtigung der Achslage für das "Brillenglases Nr. 2". In der horizontalen und vertikalen Richtung treten keine Abweichungen auf.

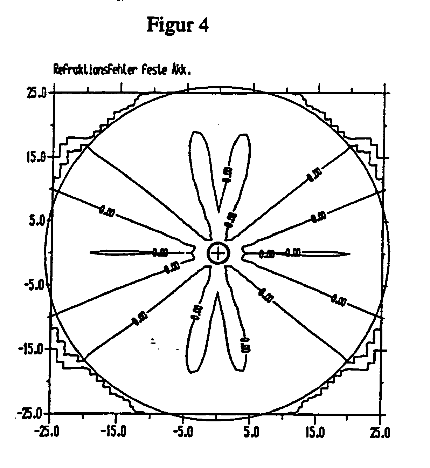

Fig. 4 zeigt den Refraktionsfehler, d.h. die Abweichung des mittleren Brechwertes vom verordneten mittleren Brechwert für das "Brillenglases Nr. 2". Man sieht, daß die Abweichungen überall um den Wert 0 schwanken.

Vorstehend ist die Erfindung anhand von Ausführungsbeispielen ohne Beschränkung des allgemeinen Erfindungsgedankens, wie er sich aus den Ansprüchen und dem allgemeinen Teil der Beschreibung ergibt, beschrieben worden.

**Patentansprüche**

1.  Verfahren zum Herstellen eines Einstärkenbrillenglases, wobei es sich bei wenigstens einer Fläche um eine atorische Fläche handelt,
    **dadurch gekennzeichnet, daß**
    nicht für alle Blickrichtungen die Abbildungsfehler korrigiert werden, sondern
    entlang zweier Linien, die in ihrem Schnittpunkt einen rechten Winkel einschließen, und derart, daß der Refraktionsfehler und der astigmatische Fehler bis zu Blickauslenkungen von 40˚ jeweils kleiner als ± 0,15 dpt sind.

2.  Verfahren nach Anspruch 1, wobei die Abweichung der Zylinderachse von der verordneten Achslage kleiner als 1˚ ist.

**3.** Verfahren nach einem der Ansprüche 1 oder 2,
**dadurch gekennzeichnet, daß** die Abweichungen für
den Refraktionsfehler und den astigmatischen Feh-ler maximal $\pm 0{,}09$ dpt betragen.

**4.** Verfahren nach einem der Ansprüche 1 bis 3,
**dadurch gekennzeichnet, daß** die zweite Fläche eine rotationssymmetrische asphärische Fläche ist.

**5.** Verfahren nach Anspruch 4,
**dadurch gekennzeichnet, daß** die rotationssymmetrische asphärische Fläche die Vorderfläche ist.

**6.** Verfahren nach einem der Ansprüche 1 bis 5,
**dadurch gekennzeichnet, daß** die Linie bzw. die Linien ebene Kurven sind.

**7.** Verfahren nach Anspruch 6,
**dadurch gekennzeichnet, daß** die Linien die Hauptschnitte sind.

**8.** Verfahren nach einem der Ansprüche 1 bis 7,
**dadurch gekennzeichnet, daß** wenigstens eine der Linien in der Horizontalebene oder der Vertikalebene liegt.

**9.** Verfahren nach einem der Ansprüche 1 bis 8,
**dadurch gekennzeichnet, daß** die atorische Fläche keine Symmetrieebene hat.

**10.** Verfahren nach einem der Ansprüche 1 bis 9,
**dadurch gekennzeichnet, daß** die Pfeilhöhen der Hauptschnitte der atorischen Fläche durch Kegelschnitt-Gleichungen mit Zusatzgliedern gegeben sind.

**11.** Verfahren einem der Ansprüche 1 bis 9,
**dadurch gekennzeichnet, daß** die Pfeilhöhen der atorischen Fläche durch Spline-Funktionen gegeben sind.

**Claims**

**1.** Method for the production of a single vision spectacle lens, at least one surface involving an atoric surface,
**characterised in that**
the image defects are not corrected for all viewing directions, but rather along two lines which enclose a right angle at their intersection point and such that the refraction error and the astigmatic error up to viewing deflections of 40˚ respectively are less than $\pm$ 0.15 dpt.

**2.** Method according to claim 1, the deviation of the cylinder axis from the prescribed axis position being less than 1˚.

**3.** Method according to one of the claims 1 or 2,
**characterised in that** the deviations for the refraction error and the astigmatic error are at maximum $\pm$ 0.09 dpt.

**4.** Method according to one of the claims 1 to 3,
**characterised in that** the second surface is a rotationally symmetrical aspherical surface.

**5.** Method according to claim 4,
**characterised in that** the rotationally symmetrical aspherical surface is the front surface.

**6.** Method according to one of the claims 1 to 5,
**characterised in that** the line or the lines are two-dimensional curves.

**7.** Method according to claim 6,
**characterised in that** the lines are the main intersections.

**8.** Method according to one of the claims 1 to 7,
**characterised in that** at least one of the lines is situated in the horizontal plane or in the vertical plane.

**9.** Method according to one of the claims 1 to 8,
**characterised in that** the atoric surface has no plane of symmetry.

**10.** Method according to one of the claims 1 to 9,
**characterised in that** the cambers of the main intersections of the atoric surface are given by conic section equations with additional terms.

**11.** Method according to one of the claims 1 to 9,
**characterised in that** the cambers of the atoric surface are given by spline functions.

**Revendications**

**1.** Procédé de fabrication d'un verre de lunette correcteur, dans lequel il s'agit, pour au moins une surface, d'une surface atorique,
**caractérisé en ce que**,
les défauts de reproduction ne sont pas corrigés pour toutes les directions de visée, mais le long de deux lignes qui comprennent un angle droit dans leur point d'intersection et de telle manière que le défaut de réfraction et le défaut astigmatique sont respectivement inférieurs à $\pm$ 0,15 dpt jusqu'à des déviations de visée de 40˚.

**2.** Procédé selon la revendication 1, dans lequel l'écart de l'axe du cylindre par rapport à la position prescrite de l'axe est inférieur à 1˚.

**3.** Procédé selon l'une des revendications 1 ou 2,
**caractérisé en ce que** les écarts pour le défaut de réfraction et le défaut astigmatique sont au maximum de $\pm 0,09$ dpt.

**4.** Procédé selon l'une des revendications 1 à 3,
**caractérisé en ce que** la deuxième surface est une surface asphérique à symétrie de révolution.

**5.** Procédé selon la revendication 4,
**caractérisé en ce que** la surface asphérique à symétrie de révolution est la face avant.

**6.** Procédé selon l'une des revendications 1 à 5,
**caractérisé en ce que** la ligne ou les lignes sont des courbes plates.

**7.** Procédé selon la revendication 6,
**caractérisé en ce que** les lignes sont les sections principales.

**8.** Procédé selon l'une des revendications 1 à 7,
**caractérisé en ce qu'**au moins une des lignes se trouve dans le plan horizontal ou dans le plan vertical.

**9.** Procédé selon l'une des revendications 1 à 8,
**caractérisé en ce que** la surface atorique n'a pas de plan symétrique.

**10.** Procédé selon l'une des revendications 1 à 9,
**caractérisé en ce que** les hauteurs de flèches des sections principales de la surface atorique sont données par comparaisons de sections coniques avec des éléments auxiliaires.

**11.** Procédé selon l'une des revendications 1 à 9,
**caractérisé en ce que** les hauteurs de flèches de la surface atorique sont données par des fonctions Spline.

## Figur 1

Astigmatismus (Kom. Glas+Auge)

## Figur 2

Refraktionsfehler feste Akk.

## Figur 3

Astigmatismus (Kom. Glas+Auge)

# Figur 4

Refraktionsfehler feste Akk.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0560999 A1

- DE 19540186 A1